(19) Europäisches Patentamt
European Patent Office
Office européen des brevets

(11) **EP 3 339 892 B1**

(12) **EUROPEAN PATENT SPECIFICATION**

(45) Date of publication and mention
of the grant of the patent:
**16.04.2025 Bulletin 2025/16**

(21) Application number: **17181029.4**

(22) Date of filing: **12.07.2017**

(51) International Patent Classification (IPC):
**G01S 13/34** *(2006.01)* **G01S 13/42** *(2006.01)*
**G01S 13/87** *(2006.01)*

(52) Cooperative Patent Classification (CPC):
**G01S 13/42; G01S 13/347;** G01S 13/003;
G01S 13/878

(54) **MULTIPLE INPUT MULTIPLE OUTPUT, MIMO, RADAR SYSTEM**

MULTIEINGANG-MULTIAUSGANG (MIMO)-RADARSYSTEM

SYSTÈME RADAR À ENTRÉES ET SORTIES MULTIPLES (MIMO)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2016 IN 201641043881
22.12.2016 IN 201641043847
22.12.2016 IN 201641043893**

(43) Date of publication of application:
**27.06.2018 Bulletin 2018/26**

(73) Proprietor: **Airbus Defence and Space GmbH
82024 Taufkirchen (DE)**

(72) Inventors:
• SANTRA, Avik
712258 Hooghly, West Bengal (IN)
• GANIS, Alexander Rudolf
80469 Munich (DE)

(74) Representative: **Isarpatent
Patent- und Rechtsanwälte Barth
Charles Hassa Peckmann & Partner mbB
Friedrichstrasse 31
80801 München (DE)**

(56) References cited:
US-A1- 2009 079 617    US-A1- 2013 342 387
US-A1- 2015 295 628    US-A1- 2016 334 501

**Description**

The invention relates to a multiple input multiple output, MIMO, radar system providing adaptive transmission of frequency subcarriers and providing orthogonality among transmit antennas of the multiple input multiple output, MIMO, radar system.

Radar (Radio Detection and Ranging) is an object detection system that employs radio waves to determine a range, angle, or velocity of objects or targets. Radar systems can be used in a wide range of applications and can be used to detect any kind of objects or targets including aircrafts, ships, spacecrafts, guided missiles, motor vehicles, weather formations and terrain. A radar apparatus comprises a transmitter generating electromagnetic waves in a radio or microwave frequency domain and transmitting antennas to transmit the generated electromagnetic waves. The radar apparatus further comprises receiving antennas to capture any return signals reflected by objects in the path of the emitted signals supplied to a receiver which is adapted to process the received signals captured by the receiving antenna.

Multiple input multiple output, MIMO, systems comprise multiple transmit and receive antennas and are widely used in wireless communications to provide spatial diversity. The MIMO concept has also been introduced to radar applications. Unlike conventional monostatic radar or phased array radar systems MIMO radar systems employ multiple transmitters, multiple receivers and multiple orthogonal signals which provide more degrees of freedom for the design of radar systems as well as advantages for signal processing. In MIMO radar systems, each transmit antenna can radiate an arbitrary waveform independently of the other transmitting antennas of the antenna array. Each receiving antenna can receive the transmitted and reflected signals. Due to the different waveforms echo signals reflected by a target or object can be assigned to a transmitter.

In a MIMO radar system orthogonal non-overlapping signals are transmitted from different transmit antennas to leverage spatial diversity that MIMO radar systems offer. The orthogonality between various transmit waveforms can be achieved through time division multiplexing, through orthogonal waveforms or through frequency division multiplexing. MIMO radar systems utilize the spatial diversity offered by the multiple transmit and receive antennas. The operating carrier frequency, multi-path reflection and antenna separation in the MIMO configuration ensures that the received signals at the multiple receive antennas are uncorrelated from one another to ensure full spatial diversity.

In MIMO Radar systems, one of the methods for achieving orthogonality among transmit antennas with a frequency division multiplexing method is by transmitting a subset of distinct non-overlapping frequencies through different antennas. In such MIMO radar systems, distinct subsets of frequency subcarriers are allocated statically to transmit antennas of the antenna array. The static allocation of subcarriers to transmit antennas causes a relative low received signal to noise ratio, SNR, of the received radar signals. This makes it inefficient or non-optimal to detect targets and objects by the radar system.

US 2013/0342387 A1 discloses a method for separating transmitted signals in radar systems and an associated radar system. In the method, the signals for transmission are shared among multiple subcarriers by means of OFDM, which subcarriers are assigned to the transmitting antennas according to a distribution scheme.

US 2016/0334501A1 discloses a radar transmitter comprises orthogonal frequency division multiplexing (OFDM) symbol generation circuitry, windowing circuitry, and control circuitry. The OFDM symbol generation circuitry is operable to modulate data onto a plurality of subcarriers to generate a plurality of OFDM symbols.

US 2015/0295628 A1 discloses a method for providing time multiplexing sequences for transmit antennas of a linear or two-dimensional MIMO radar unit that includes antennas situated close to one another (collocated MIMO radar).

Accordingly, it is an object of the present invention to provide an improved multiple input multiple output, MIMO, radar system for detecting targets in the surrounding of the system.

The present application provides a method for providing orthogonality among signals transmitted by the transmit antennas of a multiple input multiple output, MIMO, radar system, a radar apparatus and a radar network, as defined in the appended set of claims.

In the following, preferred embodiments of the different aspects of the present invention are described in detail with reference to the enclosed figures.

Fig. 1      shows a block diagram of a multiple input multiple output, MIMO, radar system according to an aspect of the present invention;

Fig. 2      shows a flowchart of a possible example of a method for adaptive transmission of frequency subcarriers;

Figs. 3, 4      show schematic diagrams for illustrating a probing phase within the method for adaptive transmission of frequency subcarriers;

Figs. 5, 6      show schematic diagrams for illustrating an adaption phase within the adaptive transmission method;

Figs. 7, 8     illustrate different operation modes of a method for adaptive transmission;

Fig. 9     shows a time frequency representation of an OFDM radar system;

Fig. 10     shows a block diagram of a possible implementation of a radio system;

Fig. 11     shows a flowchart of a possible example of a method for providing orthogonality among transmit antennas;

Fig. 12     illustrates a possible transmission scheme as employed by the method for providing orthogonality as illustrated in Fig. 11;

Fig. 13     shows schematically a diagram for illustrating the processing of received signals transmitted according to the transmission scheme in Fig. 12;

Fig. 14     shows a further possible exemplary implementation of a transmission scheme which can be used by a method for providing an orthogonality;

Fig. 15     shows a flowchart of a possible exemplary embodiment of a method for providing orthogonality among transmit antennas according to the present invention;

Fig. 16     shows schematically a transmission scheme as employed by the method according to the present invention;

Fig. 17     illustrates schematically the processing of receive signals when using the transmission scheme of Fig. 16;

Fig. 18     illustrates schematically an exemplary embodiment of a radar network employing the method according to the present invention.

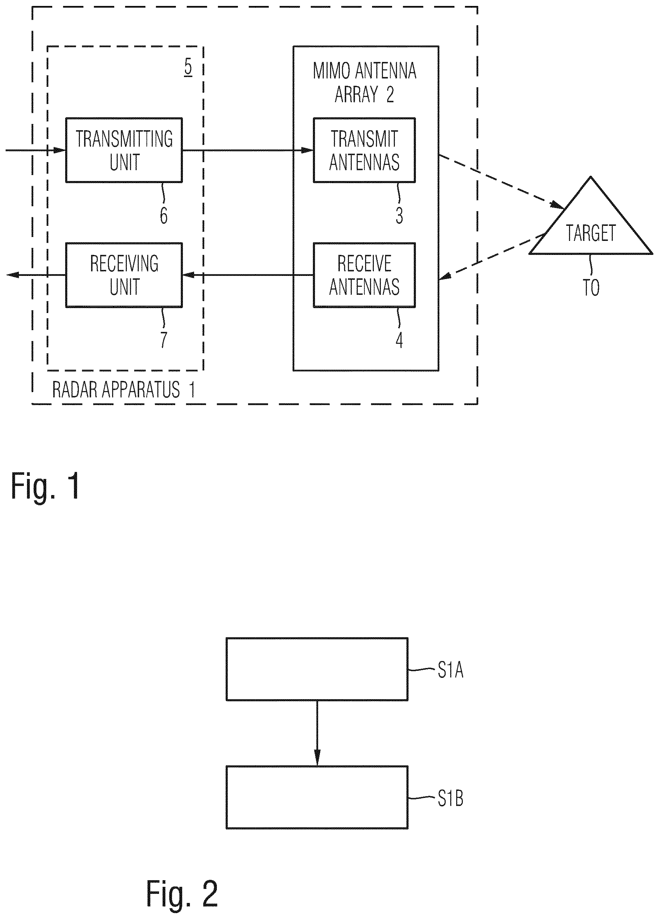

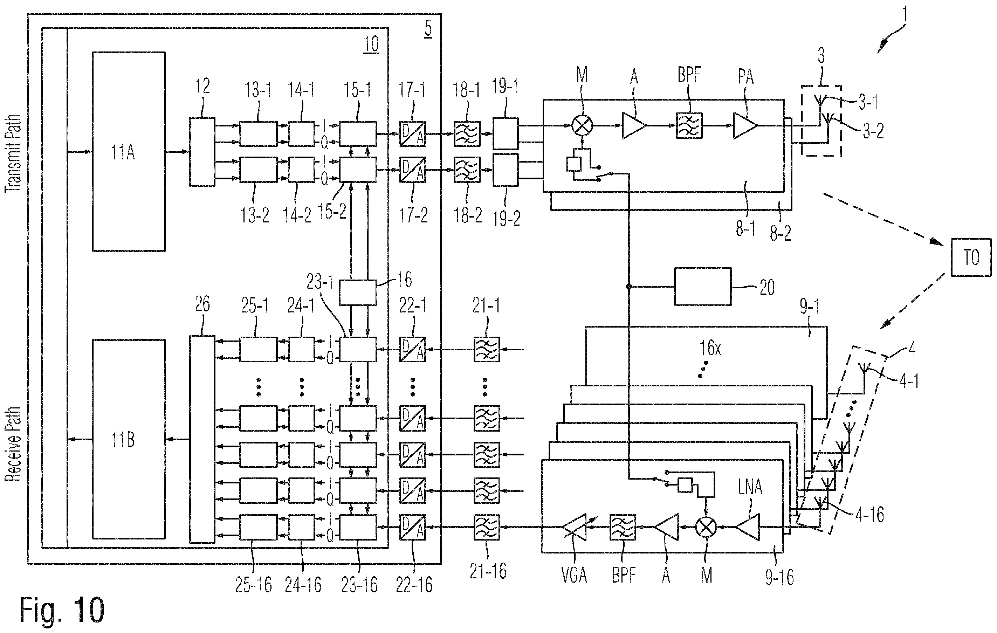

As can be seen in Fig. 1, a multiple input multiple output, MIMO, radar apparatus 1 according to the present invention comprises in the illustrated embodiment at least one MIMO antenna array 2. The MIMO radar antenna array 2 comprises transmit antennas 3 adapted to transmit radar signals and receive antennas 4 adapted to receive reflected or echo signals which can be reflected by a target object TO as illustrated schematically in Fig. 1. The MIMO radar antenna array 2 is connected to a signal processing unit 5 as shown in Fig. 1. The signal processing unit 5 comprises in the illustrated exemplary embodiment a transmitting unit or transmitter 6. The signal processing unit 5 further comprises in the illustrated embodiment a receiving unit or receiver 7. A possible implementation of the radar apparatus 1 as shown in Fig. 1 is illustrated in Fig. 10. The radar apparatus 1 comprises a transmit signal path and a receive signal path. In the transmit signal path, the output signals of the transmitting unit 6 are supplied to the different transmit antennas 3 of the MIMO antenna array 2. In the receive signal path, the output signals received by the receive antennas 4 of the MIMO antenna array 2 are output to the receiving unit 7 for processing. The radar apparatus 1 is configured to perform an adaptive transmission of frequency subcarriers through the transmit antennas 3 of the multiple input multiple output, MIMO, radar antenna array 2.

Fig. 2 shows a flowchart of a possible example of a method for adaptive transmission of frequency subcarriers which can be performed by the radar apparatus 1 illustrated in Fig. 1. In a first step S1A, all frequency subcarriers from all transmit antennas of the transmit antenna array 3 shown in Fig. 1 are transmitted in a probing phase in a time division multiplexing mode. Further, in a step S1B, in an adaption phase, frequency subcarriers are allocated dynamically to transmit antennas of the transmit antenna array 3 by optimizing a received signal strength RSSI.

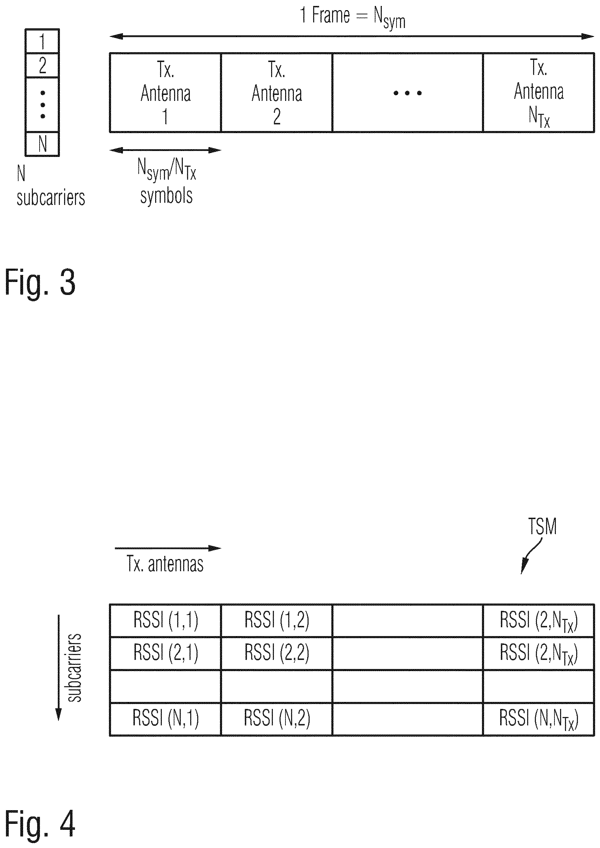

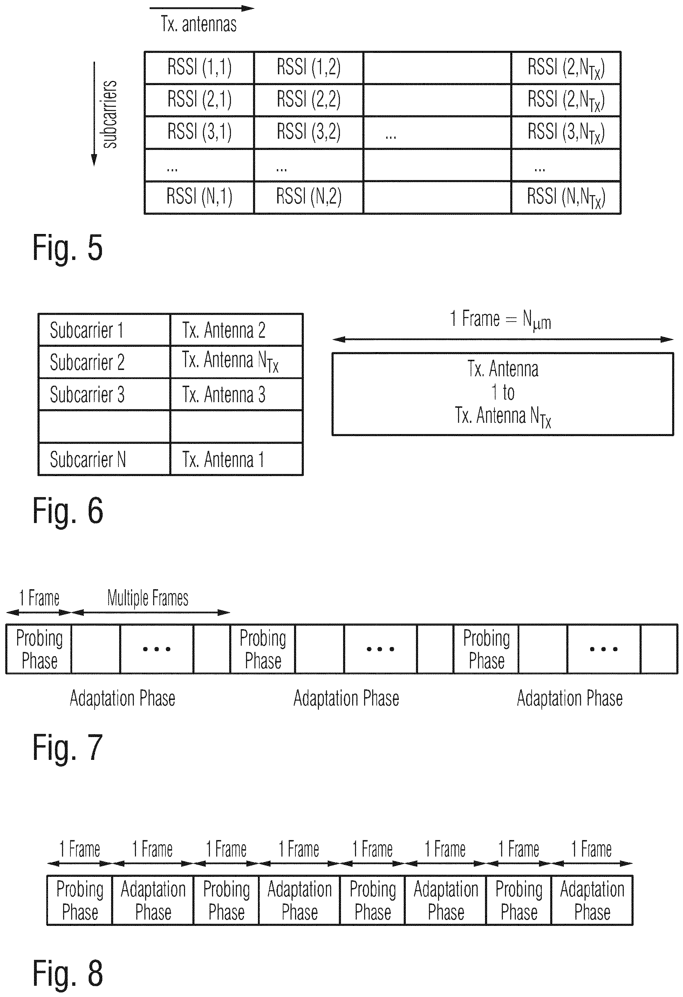

Accordingly, there are two phases, i.e. a probing phase and an adaption phase. The probing phase is illustrated in Figs. 3, 4. The adaption phase is illustrated in Figs. 5, 6.

In a possible example, the frequency subcarriers are allocated adaptively to transmit antennas by either locally optimizing the received signal strength, RSSI, at a frequency subcarrier or by globally optimizing the total received signal strength RSSI from any given transmit antenna. Accordingly, in a possible example of the adaptive transmission method as shown in Fig. 2, the frequency subcarriers are allocated to transmit antennas in step S1B dynamically by locally optimizing the received signal strength RSSI over the frequency subcarriers for each single transmit antenna. In an alternative example of the method for adaptive transmission as illustrated in Fig. 2, the frequency subcarriers are allocated in step S1B to transmit antennas of the transmit antenna array 3 dynamically in the adaption phase by globally optimizing the total received signal strength RSSI over the frequency subcarriers for all transmit antennas of the transmit antenna array 3. The received signal strength RSSI can be computed over each frequency subcarrier for all transmit antennas. In a possible example, the probing phase and the adaption phase are alternating and repeated periodically in a periodic sequence as also illustrated in Figs. 7, 8.

In a possible example, the probing phase comprises a frame to transmit all frequency subcarriers in one or more symbols from all transmit antennas of the transmit antenna array 3 in a time division multiplexing mode by switching between the transmit antennas in a round robin scheme.

The adaption phase comprises in a possible example at least one frame where the transmit antennas transmit simultaneously the frequency subcarriers allocated to the transmit antennas of the transmit antenna array 3. In the adaption phase, frequency subcarriers can be allocated to the transmit antennas to provide a subcarrier-antenna mapping.

In a possible implementation of the adaptive transmission method, at least a minimum number of frequency subcarriers is allocated to each transmit antenna 3-i of the transmit antenna array 3. Further, in a possible example, in the adaption phase, individual frequency subcarriers can be allocated to transmit antennas of the transmit antenna array 3 by optimizing a received signal strength, i.e. by maximizing a received signal strength RSSI.

In a further possible example of the adaptive transmission method, in the adaption phase, a frequency subcarrier block of contiguous, i.e. neighbouring frequency subcarriers is allocated to transmit antennas of the transmit antenna array 3 by optimizing a mean received signal strength RSSI over the contiguous neighbouring subcarriers of the frequency subcarrier block.

In a still further possible example of the adaptive transmission method as illustrated in Fig. 2, if the received signal strength RSSI provided by a frequency subcarrier allocated to a transmit antenna of the MIMO radar system drops significantly from the time where the respective frequency subcarrier has been allocated to this transmit antenna, the respective frequency subcarrier is dynamically reallocated.

Fig. 3 shows a schematic diagram for illustrating a transmission of signals in a probing phase performed in step S1A of the method for adaptive transmission. The adaptive transmission via the antenna array 3 comprises in the illustrated example a probing phase having a frame comprising several symbols NSYM. The transmit antenna array 3 comprises $N_{TX}$ transmit antennas 3-i in the illustrated example. In the probing phase, all frequency subcarriers are transmitted in one or more symbols from all transmit antennas 3-i of the transmit antenna array 3 in a time division multiplexing mode, TDM, by switching between the transmit antennas 3-i of the transmit antenna array 3 in a round robin scheme as illustrated in Fig. 3. For the different frequency subcarriers any kind of signal can be transmitted, for instance a pseudorandom signal or the like.

Fig. 4 illustrates a target strength matrix TSM indicating for each frequency subcarrier and each antenna the received signal strength RSSI. The transmit antenna array 2 can comprise for instance in a possible example two transmit antennas ($N_{TX}$=2) and can use in a possible exemplary implementation N=1024 frequency subcarriers fsc. The matrix illustrated in Fig. 6 comprises in this example N=1024 multiplied by 2 data entries. The target signal strength matrix, TSM, illustrated in Fig. 4 can change dynamically and is created on the receiving side of the radar apparatus 1 shown in Fig. 1. The radar apparatus 1 comprises a receive antenna array 4 comprising several receive antennas. In a possible example, the receive antenna array 4 comprises 16 receive antennas 4-i. For each receive antenna 4-i, a target strength matrix TSM as illustrated in Fig. 4 can be provided.

In a possible example of the method, the different frequency subcarriers, for instance N=1024 different frequency subcarriers, can be allocated to different transmit antennas, for instance to two different transmit antennas of the transmit antenna array 3, dynamically in the adaption phase by optimizing the received signal strength RSSI over the frequency subcarriers for each transmit antenna 3-i. The data entries for the received signal strength RSSI can be read from the target strength matrix TSM as illustrated in Fig. 4. In the adaption phase, the received signal strength RSSI over the frequency subcarriers for each transmit antenna is optimized, i.e. maximized. The optimization or maximization of the received signal strength RSSI can be performed either locally or globally. For local optimization, the received signal strength RSSI is optimized for the frequency subcarriers for each transmit antenna 3-i separately. Alternatively, for global optimization, the total received signal strength RSSI is maximized over the frequency subcarriers for all transmit antennas of said transmit antenna array 3.

Fig. 5 illustrates schematically a signal processing during the adaption phase of the adaptive transmission method. The number $N_{TX}$ of transmission antennas 3-i can vary and can comprise two or more transmission antennas. Further, the number N of frequency subcarriers fsc can vary in different applications. In a possible implementation, the number of frequency subcarriers fsc is N=1024. In the illustrated example of Fig. 5, the different received signal strengths RSSI are illustrated for each frequency subcarrier and each transmit antenna. For instance, the signal strength RSSI (1, 2) in the first row of the illustrated matrix indicates the received signal strength RSSI for the first frequency subcarrier fsc1 and the second transmission antenna 3-2. In the adaption phase, the transmission antennas of the transmit antenna array 3 are adapted to transmit simultaneously with the allocated frequency subcarriers that provide a maximum received signal strength RSSI in the adaption phase. This can be done by locally optimizing the received signal strength for each single transmit antenna separately. In Fig. 5, the maximum received signal strength RSSI for each frequency subcarrier fsc is printed in bold letters. In an alternative implementation, the subcarrier transmit antenna mapping can be derived by maximizing a global or overall received signal strength using an optimization algorithm.

Accordingly, in the probing phase that comprises typically a first frame, all frequency subcarriers are transmitted in one or more symbols from all transmit antennas in a time division multiplexing mode TDM by switching between the transmit antennas 3-i in a round robin manner. Since the transmit antennas of the transmit antenna array 3 are switched in the time division multiplexing mode and a cyclic prefix CP is chosen so as to avoid intercarrier interference the transmissions from the respective transmit antennas of the transmit antenna array 3 can be separated from each another. In the local optimization implementation, for each n element of N, wherein N is the number of frequency subcarriers fsc in the system available for transmission, the received signal strength values RSSI are computed over each frequency subcarrier n for all $N_{TX}$ transmit antennas as follows:

$$RSSI = \left\{ \left| h_{TX,i}(n) \right|^2 \right\}_{i=1}^{N_{TX}}. \tag{1}$$

In the adaptive phase, i.e. during the subsequent frames, the frequency subcarriers subset for transmission from a particular transmit antenna 3-i of the transmit antenna array 3 is selected or chosen so as to maximize the received signal strength RSSI over those frequency subcarriers. Accordingly, each transmit antenna is selected for a particular frequency subcarrier which offers a maximum received signal strength RSSI and can be expressed as follows:

$$assign\ subcarrier\ n\ to\ tx\ i = \arg \max_{i} \left\{ \left| h_{Tx,i}(n) \right|^2 \right\} \tag{2}$$

In an example, the probing phase and the adaptive phase are repeated periodically. The proposed optimization is based on locally optimizing the utilization of transmit antenna-subcarrier resources to maximize the received signal strength RSSI at each frequency subcarrier fsc with minimal computation resources.

In an alternative example of the adaptive transmission method, the optimization is performed globally. Similar to the first implementation of the probing phase, all frequency subcarriers fsc are transmitted through all transmit antennas 3-i in a time division multiplexing mode, TDM. Also, the received signal strength RSSI at each frequency subcarrier from all transmit antennas are similarly computed. A difference in the optimization lies in the way the subcarrier-transmit antenna map is generated. In the alternative implementation, a subcarrier-transmit antenna pair assignment is done by solving an integer linear programming problem for c(n,i) as follows:

$$\max_{c(n,i)} \sum_{n=1}^{N} \sum_{i=1}^{N_{TX}} c(n,i) \left| h_{TX,i}(n) \right|^2$$

$$s.t. \sum_{i=1}^{N_{TX}} c(n,i) = 1\ \forall n\ \varepsilon\ N\ \&$$

$$c(n,i)\ \varepsilon\ (0,1)\ \forall\ n\ \varepsilon\ N,\ i\ \varepsilon\ N_{TX} \tag{3}$$

The subcarrier-transmit antenna assignment

$$c(n,i) = \begin{cases} 1 & indicates\ subcarrier\ n\ not\ assigned\ antenna\ i \\ 0 & indicates\ subcarrier\ n\ not\ assigned\ antenna\ i \end{cases} \tag{4}$$

is achieved by solving an integer linear program to maximize the overall received signal strength RSSI of the MIMO radar system in the adaption phase. Solving the above-referenced integer linear problem requires more computation resources than the first alternative optimization implementation, however, computation constraints can be relaxed as $0 \leq c(n,i) \leq 1$ and subsequently the result can be thresholded as: $c(n,i) \geq 0.5$ set $c(n,i)=1$ else 0. Accordingly, the complexity for solving the optimization problem can be drastically reduced by approximating the optimization problem as a linear programming problem which can be solved in polynomial time complexity through fast interior-point method solvers.

In a possible implementation, it can be ensured that at least $N_{min}(\leq N/N_{TX})$ frequency subcarriers are assigned to a transmit antenna of the transmit antenna array 3. Further, instead of individual frequency subcarriers allocated to any transmit index a block of contiguous or neighbouring frequency subcarriers can be allocated to any transmit antenna based on maximizing a mean received signal strength RSSI over the complete contiguous frequency subcarrier block to reduce the required computational complexity. If, for instance, $N_{ch}$ is the number of contiguous frequency subcarriers then a modified adaptive optimization can be done over a $N/N_{ch}$ set instead of N frequency subcarriers.

After a warm-up phase, i.e. at least one probing phase and adaption phase instead of optimizing over all the frequency subcarriers it is possible to only re-optimize a subcarrier-transmit-antenna pair for few frequency subcarriers, whose

$$\frac{Present\ RSSI\left(n, i_{assigned}\right)}{RSSI_{max}\left(n\right)} < \mu, \tag{5}$$

wherein $RSSI_{max}(n)$ is the maximum received signal strength RSSI at frequency subcarrier n that leads to an assignment of frequency subcarrier n to $i_{assigned}$. Present $RSSI(n,i_{assigned})$ is the same received signal strength RSSI on the probing phase of the present cycle. Accordingly, such frequency subcarriers are re-optimized whose received signal strength RSSI has drastically or significantly dropped from the time it was allocated to the antenna.

Fig. 6 further shows schematically the adaption phase in a MIMO radar system employing the adaptive transmission method. The switching between the antennas is performed in the frequency domain between frequency subcarriers.

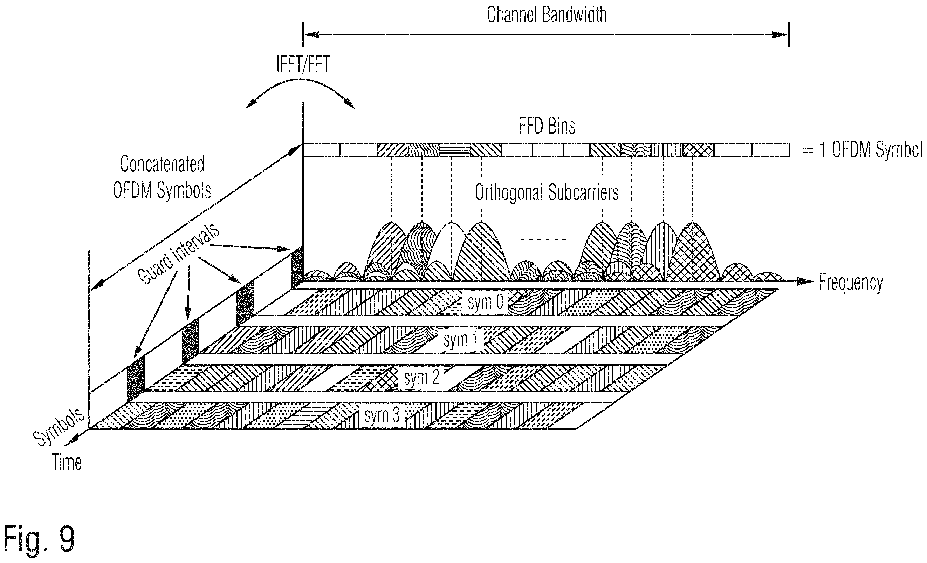

Fig. 7 shows schematically a first operation mode of the radar system where a probing phase comprises a single frame whereas the adaption phase comprises multiple frames. In contrast, Fig. 8 illustrates an operation mode where both the probing phase and the adaption phase each comprise a single frame. Accordingly, in the operation mode illustrated in Fig. 8, the adaption is performed more often. The operation mode illustrated in Fig. 7 is more suitable in situations where the received signal strength RSSI does not change rapidly, for instance for a stationary or slow target such as a pedestrian. The other operation mode illustrated in Fig. 8 is more suitable for situations where the received signal strength RSSI changes more drastically, for instance for a fast-moving target or object such as a car or aeroplane. In a possible example, the radar apparatus 1 according to the present invention can switch between different operation modes including the operation mode 1 illustrated in Fig. 7 and the second operation mode illustrated in Fig. 8. Fig. 9 illustrates schematically a time frequency representation of a OFDM signal over N frequency subcarriers and K symbols as employed in a possible example of the radar apparatus 1 according to the present invention. In a possible example, the symbols in the probing phase and the adaption phase comprise OFDM symbols as shown in Fig. 9.

The information secured by the MIMO radar system includes the position, velocity and aspect angle of a target object TO relative to the radar unit. The OFDM signal is composed of modulation symbols and can be applied for radar applications. An OFDM symbol can comprise an IFFT OFDM waveform and a guard interval as illustrated in Fig. 9. IFFT creates OFDM waveforms from OFDM subcarriers. A modulated frequency subcarrier comprises one point in frequency and time. An OFDM burst can comprise one or more OFDM symbols as shown in Fig. 9.

Fig. 10 shows a possible hardware implementation of a radar apparatus 1 as shown in Fig. 1. In the illustrated example, the transmit antenna array 3 of the radar apparatus comprises two transmit antennas 3-1, 3-2. The receive antenna array 4 comprises in the illustrated example for instance sixteen receive antennas 4-1 to 4-16. The radar apparatus 1 comprises a transmit signal path and a receive signal path. In the illustrated example, each antenna 3-i of the transmit antenna array is connected to a corresponding RF up-conversion unit 8-i. In a similar manner, each of the sixteen receive antennas 4-i of the receive antenna array 4 is connected to an associated RF down-conversion unit 9-i. In the illustrated example, the signal processing unit 5 comprises a FPGA 10 (Field Programmable Gate Array). The Field Programmable Gate Array 10 comprises in the illustrated implementation several subunits including a radar transmission signal generator 11A and a radar receive signal processing unit 11B. The radar transmit signal generation unit 11A can provide selected predetermined signals such as a chirp signal or a pseudorandom signal. This signal is supplied to a subcarrier mapping unit 12. The transmit signal path shown in Fig. 10 comprises further two separate IFFT units 13-1, 13-2, two cyclic prefix units 14-1, 14-2 and two parallel vector modulators 15-1, 15-2 connected both to a numerically controlled oscillator NCO 16. Further, the transmit signal path comprises two digital analog converters 17-1, 17-2 followed by band-pass filters 18-1, 18-2. Further, the transmit signal path comprises in the illustrated implementation, two SPDT switches 19-1, 19-2 to select a transmit antenna 3-1, 3-2 within the transmit antenna array 3. The first SPDT switch 19-1 supplies the signal to the first RF up-conversion unit 8-1 and the other SPDT switch 19-2 supplies the signal to the other RF up-conversion unit 8-2 for the second transmit antenna 3-2. The up-conversion units 8-i comprise a mixer M followed by an amplifier A, a further band-pass filter BPF and a power amplifier PA as illustrated in Fig. 10. The mixer M can be switched to a phase-locked loop, PLL, frequency synthesizer 20 of the radar apparatus 1. This PLL frequency synthesizer 20 can for instance provide a signal in a frequency range between 4 and 13.6 GHz. The radar apparatus 1 comprises in the illustrated example two transmit antennas 3-1, 3-2 for transmission signals for instance with a 50 MHz bandwidth.

The radar apparatus 1 further comprises in the illustrated example of Fig. 10 sixteen receive antennas 4-i adapted to receive signals for instance with a 50 MHz bandwidth. Each receive antenna 4-i is connected to an associated RF down-conversion unit 9-i as shown in Fig. 10. The RF down-conversion unit comprises an LNA multiplier, a mixer M, an amplifier A followed by a band-pass filter BPF and an adaptive VGA as shown in Fig. 10. The multiplier M of the RF down-conversion unit can be switched to the phase-locked loop, PLL, frequency synthesizer 20 of the radar apparatus 1. Each of the RF down-conversion units 9-i is followed within the receive signal path of the radar apparatus 1 by an associated band-pass filter 21-i and a digital analog converter 22-i. Accordingly, the receive signal path of the radar apparatus 1 illustrated in Fig. 10 comprises in the illustrated example sixteen channels. For each channel, a vector demodulator 23-i is provided connected to the numerically controlled oscillator 16. The IQ output signals of the vector demodulators 23-i are supplied to an inverse cyclic prefix unit 24-i followed by an FFT unit 25-i as shown in Fig. 10. The output signals of all sixteen FFT units 25-i are supplied to a subcarrier demapping unit 26 of the receive signal path. The subcarrier demapping unit 26 provides an output signal which is supplied to the radar receive signal processing unit 11B of the FPGA 10.

The transmit signal path and the receive signal path both comprise a digital portion and an analog RF frontend portion. The antennas of the transmit antenna array 3 and the receive antenna array 4 are connected to the analog RF front portion of the radar apparatus 1. The radar signals transmitted by the transmit antennas 3-i of the transmit antenna array 3 can be reflected by a target object TO wherein the reflected signals are received by the receive antenna array 4-i of the receive antennas 4 of the radar apparatus 1. The MIMO radar apparatus 1 as illustrated in Fig. 10 can provide a position, velocity and aspect angle of a target object TO relative to the radar apparatus 1. The radar apparatus 1 as shown in Figs. 1, 10 can be used for a wide range of applications. For instance, commercial airliners can be equipped with radar devices or radar apparatuses 1 to warn a pilot of obstacles in the path of the aeroplane or approaching the aeroplane. Further, the radar apparatus 1 facilitates the landing of an aeroplane in bad weather conditions at airports equipped with radar-assisted ground-controlled approach systems. The radar-assisted ground-controlled approach system monitors the plane's flight which can be observed on radar screens while operators give radio landing directions to the pilot of the plane. Further, a multiple input multiple output radar apparatus 1 can facilitate the creation of a radar network which can be used for tracking, surveillance and defence operations. A MIMO radar apparatus 1 as illustrated in the examples of Figs. 1, 10 can also be used in automotive applications where permissible power transmission is limited. Further, the MIMO radar apparatus 1 as illustrated in Figs. 1, 10 can also be used for providing situational awareness in flying platforms such as UAVs and helicopters. The radar apparatus 1 as shown in Figs. 1, 10 uses an adaptive transmission method for adaptive transmission of frequency subcarriers to increase the signal to noise ratio SNR of the received signals reflected from a target object TO. The received signal to noise ratio, SNR, is improved through optimal subcarrier transmission antenna pair assignment, i.e. by dynamically allocating in an adaption phase frequency subcarriers to the transmit antennas 3-i of the MIMO radar apparatus 1 by optimizing the received signal strength RSSI globally or locally.

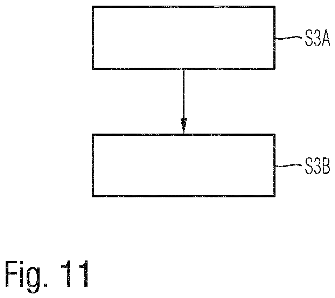

Fig. 11 shows a flowchart of a possible example of a method for providing orthogonality among transmit antennas of a multiple input multiple output, MIMO, radar antenna array of a radar system. The method illustrated in Fig. 11 can be used for a radar apparatus 1 as illustrated in Fig. 1 or in Fig. 10. For radar systems, it is important to provide orthogonality among transmit signals or transmit waveforms X to ensure that they can be separated again.

With the method for providing orthogonality among transmit antennas such as transmit antennas 3-i of the transmit antenna array 3 illustrated in Figs. 1, 10, there can be provided two main steps.

In a first step S3A, transmit signal waveforms x are transmitted using all, N, frequency subcarriers from any transmit antenna 3-i of the multiple input multiple output, MIMO, radar antenna array. In a further step S3B, a linear complex transformation of the transmit signal waveforms is performed across transmit antennas 3-i and across subsequent symbols of the transmit signal waveforms X to provide separability of the transmit signal waveforms at any receive antenna 4-i of the multiple input multiple output, MIMO, radar antenna array 2 through matched filtering.

In a further step S3C a pulse coding operation across blocks of consecutive symbols 1S is performed in order to achieve pulse diversity.

The transmit signal waveforms using all, N, frequency subcarriers can be transmitted in a possible example from two collocated transmit antennas 3-1, 3-2 of the transmit antenna array 3 of the radar apparatus 1 as illustrated in the examples of Figs. 1, 10.

In a possible implementation of the method for providing orthogonality among transmit antennas, a first transmit signal waveform (X1) is transmitted as a first symbol from a first transmit antenna 3-1 and a second transmit signal waveform (X2) is transmitted simultaneously as a first symbol from a second transmit antenna 3-2 of the multiple input multiple output, MIMO, radar antenna array. Further, in a possible implementation, a negative conjugate second transmit signal waveform (-X2*) is transmitted at a second symbol from the first transmit antenna 3-1 and a conjugate first transmit signal waveform (X1*) is transmitted as a second symbol from the second transmit antenna 3-2 of said multiple input multiple output, MIMO, radar antenna array. The transmitted symbols can comprise OFDM symbols.

The method for providing orthogonality among transmit antennas operates with two transmit antennas 3-1, 3-2 of a transmit antenna array 3. The waveforms X are transmitted over two symbols in a frame from the two transmission antennas 3-1, 3-2 as follows:

$$\begin{bmatrix} \underline{y_1} \\ \underline{y_2} \end{bmatrix} = \begin{bmatrix} I(x_1) & I(x_2) \\ I(-x_2^*) & I(x_1^*) \end{bmatrix} \begin{bmatrix} \underline{h_1} \\ \underline{h_2} \end{bmatrix} + \begin{bmatrix} \underline{z_1} \\ \underline{z_2} \end{bmatrix} \tag{6}$$

wherein $\underline{h}_1$ and $\underline{h}_2$ are the responses of the target object TO on the N frequency subcarriers fc transmitted from the first and second transmit antenna 3-1, 3-2 and received by the receive antennas 4-i. The number of receive antennas 4-i used in the method for providing orthogonality among transmit antennas can vary. In a possible implementation, sixteen receive antennas 4-1 to 4-16 are used. $x_1$, $x_2$ in equation (6) represent the transmitted signals on the N frequency subcarriers fc $\underline{y}_1$, $\underline{y}_2$ represent the received signals on the N frequency subcarriers at symbol 1 and symbol 2 and $\underline{Z}_1$, $\underline{Z}_2$ represent noise.

At any of the receive antennas 4-i, a target response of the N frequency subcarriers as seen from the first transmission antenna 3-1 at the receiver is processed and linearly separated as follows:

$$[I(x_1^*) \quad I(-x_2)]\begin{bmatrix} \underline{y_1} \\ \underline{y_2} \end{bmatrix} = [I(|x_1|^2 + |x_2|^2) \quad I(x_1^* x_2 - x_1^* x_2)]\begin{bmatrix} \underline{h_1} \\ \underline{h_2} \end{bmatrix} = \alpha \underline{h_1} \tag{7}$$

wherein $\alpha$ is a constant scalar value given as $|x_1|^2 + |x_2|^2$
and cannot affect the subsequent radar processing for range, Doppler and aspect angle estimation.

Similarly, at any of the sixteen receive antennas 4-i, a target response of the N frequency subcarriers as seen from the second transmission antenna 3-2 at the receiver is processed and linearly separated as follows:

$$[I(x_2^*) \quad I(x_1)]\begin{bmatrix} \underline{y_1} \\ \underline{y_2} \end{bmatrix} = [I(-x_1 \, x_2^* + x_1 \, x_2^*) \quad I(|x_1|^2 + |x_2|^2)]\begin{bmatrix} \underline{h_1} \\ \underline{h_2} \end{bmatrix} = \alpha \, \underline{h_2} \tag{8}$$

The transmit signal waveforms $x_1$, $x_2$ can comprise different kinds of signals such as pseudorandom signals. The two signal waveforms $x_1$, $x_2$ have to be different to achieve orthogonality using the method for providing orthogonality as also illustrated in the flowchart of Fig. 11. The method does leverage the spatial diversity of the MIMO radar system and also fast-time diversity. Accordingly, it can make the system more robust against adverse phenomena such as speckle, occlusion of targets or multi-path effects.

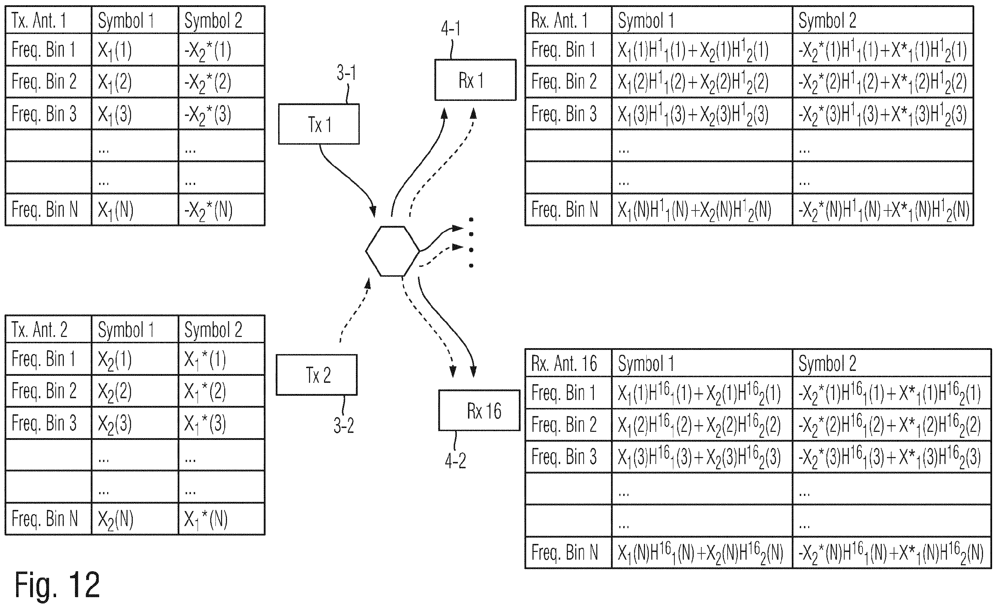

Fig. 12 illustrates a proposed transmission scheme across time, frequency and transmission antennas 3-i in a MIMO radar system to illustrate the operation of a method for providing orthogonality among transmit antennas. Fig. 12 illustrates the two transmit antennas 3-1, 3-2 of the transmit antenna array 3. The transmit antennas 3-1, 3-2 are collocated in an example and transmit radar signals to a target object TO reflecting the radar signals to receive antennas 4-1 to 4-16 of the receive antenna array 4.

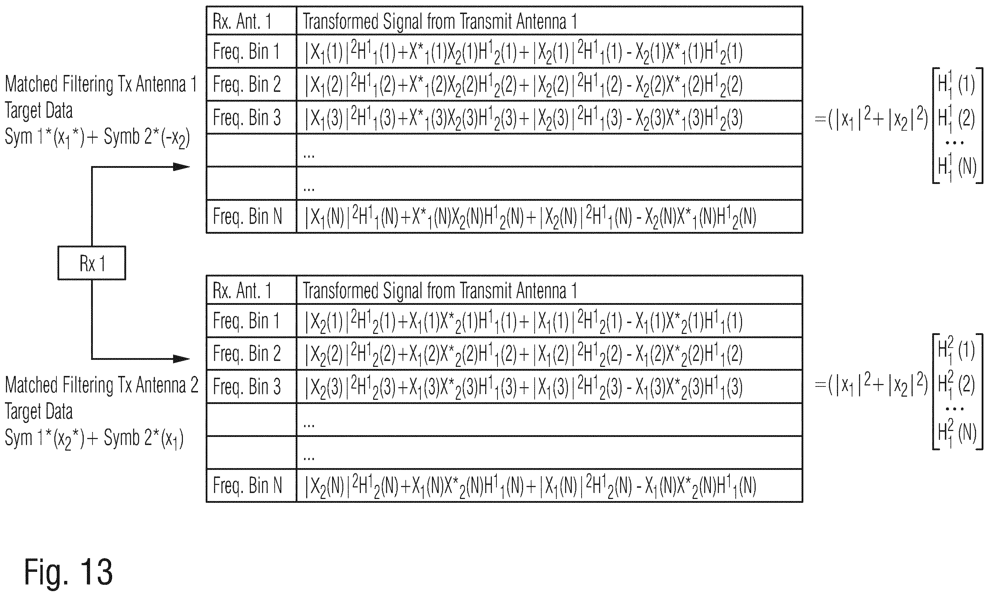

Fig. 13 illustrates the reception of target data across time, frequency and transmit antennas for the first receive antenna 4-1 for illustrating the operation of a method for providing orthogonality among transmit antennas 3-i. The linear transformation illustrated in Fig. 13 can be applied in the same manner at the other receive antennas 4-2 to 4-16 as well. The receiving unit 7 of the radar apparatus 1 is adapted to perform a matched filtering of signals received by the receive antennas 4-i of the MIMO radar antenna array 2 to separate the transmit signal waveform at any receive antenna 4-i as illustrated in Fig. 13.

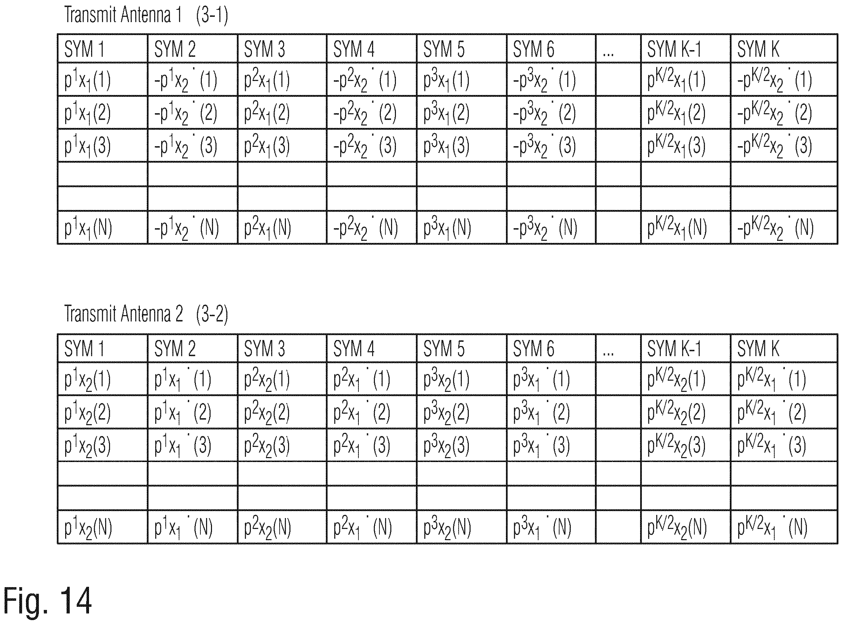

Fig. 14 illustrates a further exemplary transmission scheme for the two transmit antennas 3-1, 3-2 when using more than two symbols.

The context value of the illustrated sequence at the end position parameterized by u is given as:

$$p^n = \exp\left(-j\frac{\pi \, un \, (u+1)}{K/2}\right), \, 0 < u < \frac{K}{2}$$

The sequence code across the symbol's pulses provides pulse diversity to the MIMO radar system.

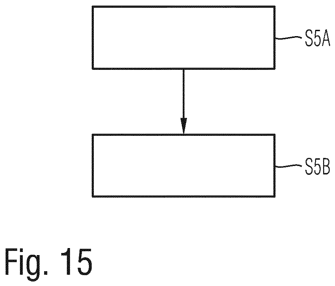

Fig. 15 shows a flowchart of a possible exemplary embodiment of a further alternative method for providing orthogonality among the transmit antennas 3-i of a multiple input multiple output, MIMO, radar system according to the present invention. The illustrated method for providing orthogonality according to the present invention comprises two main steps.

In a first step S5A, distinct time-coded data signals are transmitted from multiple, Nt, transmit antennas 3-i of a multiple input multiple output, MIMO, radar antenna array. In a further step S5B of the method for providing orthogonality according to the present invention, signals received by multiple receive antennas 4-i of the multiple input multiple output, MIMO, radar antenna array are processed to separate a target response for all, Nt, transmit antennas 3-i of the multiple input multiple output, MIMO, radar antenna array. The method for providing orthogonality among the transmit antennas can employ more than two transmit antennas. With the method according to the present invention, the coding is done only across time and can be used for both closely separated antennas and widely separated antennas. Further, the method according to the present invention scales with multiple transmit antennas 3-i. The method for providing orthogonality according to the present invention can also be used for radar networks where individual radar apparatuses A in the radar network operate independently but where time and frequency is synchronized with other radar apparatuses within the radar network by a central control unit of the radar network.

Accordingly, in a possible embodiment of the method for providing orthogonality among transmit antennas according to the present invention, multiple transmit antennas 3-i of the multiple input multiple output MIMO radar antenna array can be collocated, i.e. located close to each other.

In an alternative embodiment of the method for providing orthogonality according to the present invention, the multiple transmit antennas 3-i of the multiple input multiple output, MIMO, radar antenna array can also be distributed and form part of a distributed radar network.

In a possible embodiment, the processing of the signals received by the multiple receive antennas 4-i of the multiple input multiple output, MIMO, radar antenna array 2 comprises a fast Fourier transformation processing FFT or a discrete Fourier transformation DFT processing. Each time-coded data signal transmitted from the multiple Nt transmit antennas of said multiple input multiple output, MIMO, radar antenna array 2 can comprise symbols carried by a predetermined number N of frequency subcarriers fc. For instance, N=1024 frequency subcarriers fc can be employed. In a possible implementation, the time-coded data symbols transmitted from the multiple Nt transmit antennas of the multiple input multiple output, MIMO, radar antenna array 2 used in the method according to the present invention can also comprise OFDM symbols.

The method for providing orthogonality among transmit antennas can comprise two or more transmit antennas 3-i. For two transmit antennas 3-1, 3-2 the following signals can be transmitted across two time indices k, k+1 as follows:

$$\begin{bmatrix} y(k) \\ y(k+1) \end{bmatrix} = \begin{bmatrix} x_1 & x_2 \\ x_1 & -x_2 \end{bmatrix} \begin{bmatrix} h_1 \\ h_2 \end{bmatrix} \qquad (9)$$

wherein $(x_1,x_1)$ and $(x_2,-x_2)$ are data transmitted from transmit antennas 3-1, 3-2, respectively, on time index k and time index k+1.

At the receiver a signal processing can be performed.

The target response from the first transmit antenna 3-1 is calculated as follows:

$$\begin{bmatrix} x_1^* & x_1^* \end{bmatrix} \begin{bmatrix} y(k) \\ y(k+1) \end{bmatrix} = \begin{bmatrix} x_1^* & x_1^* \end{bmatrix} \begin{bmatrix} x_1 & x_2 \\ x_1 & -x_2 \end{bmatrix} \begin{bmatrix} h_1 \\ h_2 \end{bmatrix} = \begin{bmatrix} 2|x_1|^2 & x_1^*x_2 - x_1^*x_2 \end{bmatrix} \begin{bmatrix} h_1 \\ h_2 \end{bmatrix} = 2|x_1|^2\, h_1 \qquad (10)$$

The target response from the second transmit antenna 3-2 can be calculated as follows:

$$\begin{bmatrix} x_2^* & -x_2^* \end{bmatrix} \begin{bmatrix} y(k) \\ y(k+1) \end{bmatrix} = \begin{bmatrix} x_2^* & -x_2^* \end{bmatrix} \begin{bmatrix} x_1 & x_2 \\ x_1 & -x_2 \end{bmatrix} = \begin{bmatrix} x_1 x_2^* - x_1 x_2^* & 2|x_2|^2 \end{bmatrix} \begin{bmatrix} h_1 \\ h_2 \end{bmatrix}$$
$$= 2|x_2|^2\, h_2 \qquad (11)$$

The method can be extended to multiple transmit antennas 3-i, for instance to Nt transmit antennas 3-i as follows:

$$\begin{bmatrix} y(k+1) \\ y(k+2) \\ y(k+3) \\ \vdots \\ y(k+N) \end{bmatrix} = \begin{bmatrix} \omega^0 & \omega^0 & \cdots & \omega^0 & \omega^0 \\ \omega^0 & \omega^1 & \cdots & \omega^{N-2} & \omega^{N-1} \\ \vdots & & \ddots & & \vdots \\ \omega^0 & \omega^{N-2} & \cdots & \ddots & \omega^{(N-1)(N-2)} \\ \omega^0 & \omega^{N-1} & \cdots & \omega^{(N-2)(N-1)} & \omega^{(N-1)(N-1)} \end{bmatrix} \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix}$$

$$(12)$$

wherein $N = N_t$ is the number of the transmit antennas 3-i and
wherein $(\omega^0, \omega^1, ..., \omega^{N-1})$ are the N-roots of unity. Accordingly, from transmit antenna 3-1 $(x_1,x_1,x_1,...,x_1)_{Nx1}$ data is transmitted on the N consecutive time indices, and from the second transmit antenna 3-2 $(x_2,\omega^1 x_2, \omega^2 x_2, ..., x_2)_{Nx1}$, data is transmitted on the N consecutive time indices and similarly on the $N^{th}$ transmit antenna $(x_N, \omega^{N-1} x_N, \omega^{2(N-1)} x_N,..., \omega^{(N-1)(N-1)} x_N)$, data are transmitted on N consecutive time indices.

The above equation (12) can be expressed as:

$$\underline{y} = \Omega \, diag(\underline{x})\underline{h}$$

$$(13)$$

wherein the matrix $\Omega$ can be implemented easily through a DFT/FFT matrix which greatly simplifies the operations and the required computation resources of the radar system.

At the receiver of the radar apparatus 1, the following calculations can be performed as follows:

$$diag\,(\underline{x}^*)\Omega^*\underline{y} = diag(\underline{x}^*)\,\Omega^*\Omega\,diag\,(\underline{x})\underline{h} = diag\left(|\underline{x}|^2\right)\underline{h}$$

$$(14)$$

In this way, the target/channel response is separated from all the $N_t$ transmit antennas 3-i. The operation for a specific antenna target/channel response can be expressed for the first transmit antenna 3-1 as follows:

$$\begin{bmatrix} x_1^* & x_1^* & x_1^* & \cdots & x_1^* \end{bmatrix} \begin{bmatrix} \omega^0 & \omega^0 & \cdots & \omega^0 & \omega^0 \\ \omega^0 & \omega^1 & \cdots & \omega^{N-2} & \omega^{N-1} \\ \vdots & & \ddots & & \vdots \\ \omega^0 & \omega^{N-2} & \cdots & \ddots & \omega^{(N-1)(N-2)} \\ \omega^0 & \omega^{N-1} & \cdots & \omega^{(N-2)(N-1)} & \omega^{(N-1)(N-1)} \end{bmatrix} \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix}$$

$$= \begin{bmatrix} Nx_1^* & \omega^0 + \omega^1 + \cdots \omega^{N-1} & \cdots & \cdots & \omega^0 + \omega^{N-1} + \cdots \omega^{(N-1)(N-1)} \end{bmatrix} \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix}$$

$$(15)$$

Using the property of N-roots of unity that $\omega^0 + \omega^1 + \cdots \omega^{N-1} = 0$, gives:

$$= \begin{bmatrix} Nx_1^* & 0 & 0 & \cdots & 0 \end{bmatrix} \begin{bmatrix} x_1 & 0 & 0 & 0 & 0 \\ 0 & x_2 & 0 & 0 & 0 \\ 0 & 0 & x_3 & 0 & 0 \\ \vdots & & & \ddots & \\ 0 & 0 & 0 & 0 & x_N \end{bmatrix} \begin{bmatrix} h_1 \\ h_2 \\ h_3 \\ \vdots \\ h_N \end{bmatrix} = N|x_1|^2 h_1$$

$$(16)$$

The operation of the other transmit antennas 3-i is performed in a similar way.

The method for providing orthogonality among the transmit antennas 3-i according to the present invention requires few computational resources and scales for multiple transmit antennas 3-i easily.

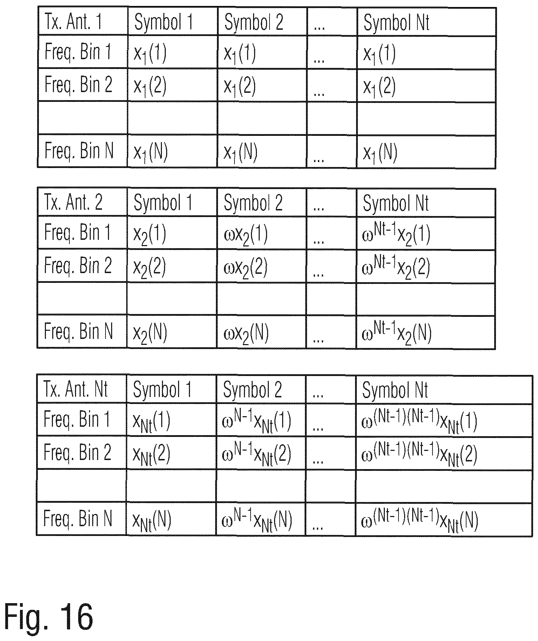

Fig. 16 illustrates the transmission of data from all Nt transmit antennas 3-i across time and frequency for a target.

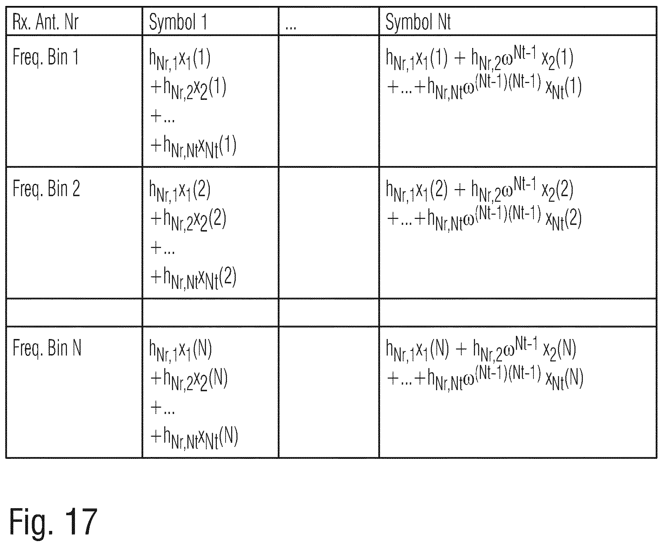

Further, Fig. 17 illustrates the received data from the receive antenna 4-i in response to the applied transmit time-coded data of all Nt transmit antennas 3-i. The method for providing orthogonality according to the present invention has the advantage that it provides a time pulse diversity in the MIMO radar system. The method for providing orthogonality according to the present invention can also be applied to radar networks where all radar units are synchronized but all radar units require orthogonality or linear separability of the respective transmit signals for target imaging or target classification.

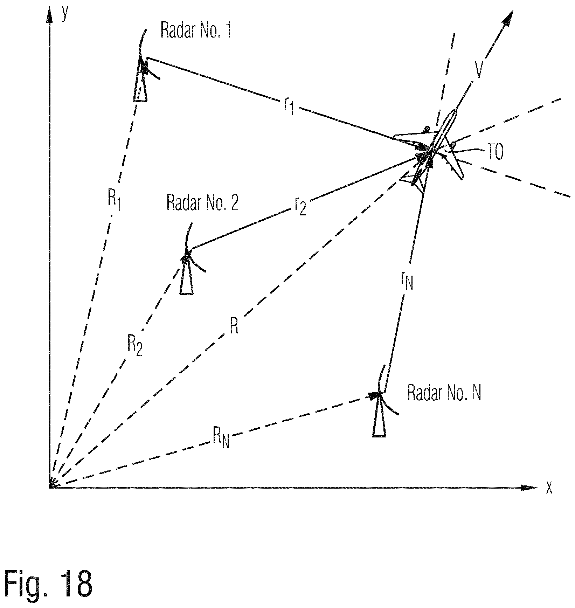

Fig. 18 illustrates schematically a possible implementation of a radar network comprising different radar units each comprising one or several transmit antennas 3-i and receive antennas 4-i. The target object TO can be for instance a moving aeroplane as illustrated in Fig. 18. The distance between the moving target object TO and the different radar units is illustrated as a radius $r_i$. The radar units have a common reference point of a coordinate system origin at a distance of $R_i$, respectively, as shown in Fig. 18. In a possible implementation, the different radar units comprise a radar apparatus 1 such as illustrated in Figs. 1, 10. The different radar units of the distributed radar network shown in Fig. 18 are connected in a preferred embodiment to a central control unit CU adapted to synchronize the distributed radar apparatuses 1 to each other. The MIMO radar system according to the present invention allows for detection of a moving target object TO more efficiently. Further, the resource allocation to detect the target object TO is optimized. The MIMO radar system according to the illustrated embodiments increases the signal to noise ratio SNR of the received signals making the detection of the target object TO more reliable. The method and radar apparatus 1 according to the present invention allow for detection of targets with a small radar cross-section RCS and/or a target object TO at a wide detection range. The method and radar apparatus 1 of the radar system can be used for radar signals in a wide frequency range, for instance from 4 to 100 GHz. The MIMO radar system according to the present invention can be used for different applications, for instance surveillance systems surveilling objects or targets in an open area or in automotive systems of cars. Further, the radar system can be used for fast-moving targets such as aeroplanes. The radar system can be used for tracking, surveillance and defence operations. The MIMO radar system can also be used for automotive radar apparatuses where power transmission is limited. The MIMO radar system can secure different kinds of information about the object or target including its position, its velocity and its aspect angle (azimuth, elevation) relative to the radar apparatus 1. The method according to the present invention provides orthogonality among the transmit antennas 3-i of the radar system. The method according to an example provides for adaptive transmission of frequency subcarriers fc to improve efficiency of the radar system.

Reference Signs

1 Radar apparatus
2 MIMO radar antenna array
3 Transmit antenna array
4 Receive antenna array
5 Processing unit
6 Transmitting unit
7 Receiving unit
8 Down conversion unit
9 Up conversion unit
10 FPGA
11A Transmit signal generator
11B Receive signal processor
12 Subcarrier mapping unit
13 IFFT
14 Cyclic prefix unit
15 Vector modulator
16 Numerical controlled oscillator
17 Digital/analogue converter
18 Band pass filter
19 SPDT switch
20 Phase locked loop frequency synthesizer
21 Band pass filter
22 Digital/analogue converter
23 Vector demodulator

24    Inverse cyclic prefix unit
25    FFT-unit
26    Subcarrier demapping unit

**Claims**

1. A method for providing orthogonality among signals transmitted by the transmit antennas (3) of a multiple input multiple output, MIMO, radar system, the method comprising the following steps:

    (a) transmitting (S5A) distinct time-coded data signals from multiple, Nt, transmit antennas (3) of a multiple input multiple output, MIMO, radar antenna array (2), wherein the distinct time-coded data signals are transmitted on $N_t$ consecutive time indices and represented by $(x_i, \omega^{i-1}x_i, \omega^{2(i-1)}x_i, ..., \omega^{(Nt-1)(i-1)}x_i)$,

    wherein $x_i$ is the data transmitted by an ith transmit antenna of the multiple, Nt, transmit antennas (3) on time index $k + 1$, $\omega^{i-1}x_i$ is the data transmitted by the ith transmit antenna of the multiple, Nt, transmit antennas (3) on time index $k + 2$, ... , $\omega^{(Nt-1)(i-1)}x_i$ is the data transmitted by the ith transmit antenna of the multiple, $N_t$, transmit antennas (3) on time index $k + Nt$,
    wherein $k$ is an integer, i is an positive integer between 1 and $N_t$, and $\omega^z$ is the $(z+1)^{th}$ root of unity, $z = (0, 1, ... , Nt-1)$; and

    (b) processing (S5B) signals received by multiple receive antennas of said multiple input multiple output, MIMO, radar antenna array (2) to separate a target response from all, Nt, transmit antennas (3) of said multiple input multiple output, MIMO, radar antenna array (2).

2. The method according to claim 1, wherein the multiple, Nt, transmit antennas (3) of said multiple input multiple output, MIMO, radar antenna array (2) are collocated or distributed.

3. The method according to claim 1 or 2, wherein the processing of the signals received by multiple receive antennas (4) of said multiple input multiple output, MIMO, radar antenna array (2) comprises Fast Fourier transformation, FFT, processing or discrete Fourier transformation, DFT, processing.

4. The method according to any of the claims 1 to 3, wherein each time-coded data signal transmitted from the multiple, Nt, transmit antennas (3) of said multiple input multiple output, MIMO, radar antenna array (2) comprises symbols carried by a predetermined number, N, of frequency subcarriers.

5. The method according to any of the claims 1 to 4, wherein the time-coded data symbols transmitted from the multiple, Nt, transmit antennas (3) of said multiple input multiple output, MIMO, radar antenna array (2) comprise OFDM symbols.

6. A radar apparatus (1) adapted to provide orthogonality among signals transmitted by transmit antennas (3) of a multiple input multiple output, MIMO, radar antenna array (2) of the radar apparatus (1), the radar apparatus (1) comprising:

    a transmitting unit (6) adapted to transmit distinct time-coded data signals from multiple, Nt, transmit antennas (3) of the multiple input multiple output, MIMO, radar antenna array (2) , wherein the transmitting unit (6) is adapted to transmit the distinct time-coded data signals on $N_t$ consecutive time indices, the transmitted distinct time-coded data signals being represented by $(x_i, \omega^{i-1}x_i, \omega^{2(i-1)}x_i, ..., \omega^{(Nt-1)(i-1)}x_i)$,
    wherein $x_i$ is the data transmitted by an ith transmit antenna of the multiple, Nt, transmit antennas (3) on time index $k + 1$, $\omega^{i-1}x_i$ is the data transmitted by the ith transmit antenna of the multiple, Nt, transmit antennas (3) on time index $k + 2$, ... , $\omega^{(Nt-1)(i-1)}x_i$ is the data transmitted by the ith transmit antenna of the multiple, Nt, transmit antennas (3) on time index $k + N_t$,
    wherein $k$ is an integer, i is an positive integer between 1 and $N_t$, and $\omega^z$ is an the $(z+1)^{th}$ root of unity, $z = (0, 1, ... , Nt-1)$, and
    a receiving unit (7) adapted to process signals received by multiple receive antennas (4) of said multiple input multiple output, MIMO, radar antenna array (2) to separate a target response from all, Nt, transmit antennas (3) of said multiple input multiple output, MIMO, radar antenna array (2).

7. The radar apparatus according to claim 6, wherein the multiple, Nt, transmit antennas (3) of said multiple input multiple output, MIMO, radar antenna array (2) are collocated or distributed.

8. The radar apparatus according to claim 6 or 7, wherein the receiving unit (7) of said radar apparatus (1) is adapted to perform a Fast Fourier transformation, FFT, processing or a discrete Forier transformation, DFT, processing of the signals received by multiple receive antennas (4) of said multiple input multiple output, MIMO, radar antenna array (2) to separate a target response from all, Nt, transmit antennas (3) of said multiple input multiple output, MIMO, radar antenna array (2).

9. The radar apparatus according to any of the claims 6 to 8, wherein each time-coded data signal transmitted from the multiple, Nt, transmit antennas (3) of said multiple input multiple output, MIMO, radar antenna array (2) comprises symbols carried by a predetermined number, N, of frequency subcarriers.

10. The radar apparatus according to any of the claims 6 to 9, wherein the time coded data signals transmitted by the multiple, Nt, transmit antennas (3) of said multiple input multiple output, MIMO, radar antenna array (2) comprise OFDM symbols.

11. A radar network comprising distributed radar apparatuses (1) according to any of the claims 6 to 10.

12. The radar network according to claim 11, wherein the distributed radar apparatuses are connected to a central control unit adapted to synchronize the distributed radar apparatuses (1).

**Patentansprüche**

1. Verfahren zum Bereitstellen von Orthogonalität zwischen Signalen, die von den Sendeantennen (3) eines MIMO-Radarsystems mit mehreren Eingängen und mehreren Ausgängen gesendet werden, wobei das Verfahren die folgenden Schritte umfasst:

(a) Übertragen (S5A) verschiedener zeitcodierter Datensignale von mehreren, Nt, Sendeantennen (3) einer MIMO-Radarantennengruppe (2) mit mehreren Eingängen und mehreren Ausgängen, wobei die verschiedenen zeitcodierten Datensignale mit Nt aufeinanderfolgenden Zeitindizes übertragen werden und dargestellt sind durch $(x_i, \omega^{i-1}x_i, \omega^{2(i-1)}x_i ..., \omega^{(Nt-1)(i-1)}x_i)$,

wobei $x_i$ die von einer i-ten Sendeantenne der mehreren Nt Sendeantennen (3) zum Zeitindex $k + 1$ gesendeten Daten sind, $\omega^{i-1}x_i$ die von der i-ten Sendeantenne der mehreren Nt Sendeantennen (3) zum Zeitindex k + 2 gesendeten Daten sind, ... ,
$\omega^{(Nt-1)(i-1)}x_i$ die von der i-ten Sendeantenne der mehreren Nt Sendeantennen (3) zum Zeitindex $k + Nt$ gesendeten Daten sind, wobei k eine ganze Zahl ist, i eine positive ganze Zahl zwischen 1 und $N_t$ ist, und $\omega^z$ die (z+1)$^{te}$ Wurzel aus der Einheit ist, z = (0, 1, ... , Nt-1); und

(b) Verarbeiten (S5B) von Signalen, die von mehreren Empfangsantennen der MIMO-Radarantennengruppe (2) mit mehreren Eingängen und mehreren Ausgängen empfangen werden, um eine Zielantwort von allen Nt Sendeantennen (3) der MIMO-Radarantennengruppe (2) mit mehreren Eingängen und mehreren Ausgängen zu separieren.

2. Verfahren nach Anspruch 1, wobei die mehreren Nt Sendeantennen (3) der MIMO-Radarantennengruppe (2) mit mehreren Eingängen und mehreren Ausgängen zusammen angeordnet oder verteilt sind.

3. Verfahren nach Anspruch 1 oder 2, wobei die Verarbeitung der Signale, die von mehreren Empfangsantennen (4) der MIMO-Radarantennengruppe (2) mit mehreren Eingängen und mehreren Ausgängen empfangen werden, die Verarbeitung der schnellen Fourier-Transformation (FFT) oder der diskreten Fourier-Transformation (DFT) umfasst.

4. Verfahren nach einem der Ansprüche 1 bis 3, wobei jedes zeitcodierte Datensignal, das von den mehreren Nt Sendeantennen (3) der MIMO-Radarantennengruppe (2) mit mehreren Eingängen und mehreren Ausgängen übertragen wird, Symbole umfasst, die von einer vorgegebenen Anzahl N von Frequenzunterträgern getragen werden.

5. Verfahren nach einem der Ansprüche 1 bis 4, wobei die zeitcodierten Datensymbole, die von den mehreren Nt Sendeantennen (3) der MIMO-Radarantennengruppe (2) mit mehreren Eingängen und mehreren Ausgängen übertragen werden, OFDM-Symbole umfassen.

6. Radargerät (1), das so ausgelegt ist, dass es Orthogonalität zwischen Signalen bereitstellt, die von Sendeantennen (3) einer MIMO-Radarantennengruppe (2) mit mehreren Eingängen und mehreren Ausgängen des Radargeräts (1) gesendet werden, wobei das Radargerät (1) umfasst:

eine Sendeeinheit (6), die so ausgelegt ist, dass sie unterschiedliche zeitcodierte Datensignale von mehreren Nt Sendeantennen (3) der MIMO-Radarantennengruppe (2) mit mehreren Eingängen und mehreren Ausgängen sendet, wobei die Sendeeinheit (6) so ausgelegt ist, dass sie die unterschiedlichen zeitcodierten Datensignale zu Nt aufeinanderfolgenden Zeitpunkten sendet, wobei die gesendeten unterschiedlichen zeitcodierten Datensignale dargestellt werden durch

$$(x_i, \omega^{i-1} x_i, \omega^{2(i-1)} x_i, ..., \omega^{(N_t-1)(i-1)} x_i),$$

wobei $x_i$ die Daten sind, die von der i-ten Sendeantenne der mehreren Nt - Sendeantennen (3) zum Zeitindex k+1 übertragen werden, $\omega^{i-1} x_i$ die Daten sind, die von der i-ten Sendeantenne der mehreren Nt-Sendeantennen (3) zum Zeitindex k+2 übertragen werden, ... , $\omega^{(Nt-1)(i-1)} x_i$ die Daten sind, die von der i-ten Sendeantenne der mehreren Nt - Sendeantennen (3) zum Zeitindex $k + N_t$ übertragen werden,
wobei k eine ganze Zahl ist, i eine positive ganze Zahl zwischen 1 und $N_t$ ist, und $\omega^z$ die (z+1)[te] Wurzel aus der Einheit ist, z = (0, 1, ..., Nt-1), und
eine Empfangseinheit (7), die geeignet ist, Signale zu verarbeiten, die von mehreren Empfangsantennen (4) des MIMO-Radarantennenfeldes (2) mit mehreren Eingängen und mehreren Ausgängen empfangen werden, um eine Zielantwort von allen Nt Sendeantennen (3) des MIMO-Radarantennenfeldes (2) mit mehreren Eingängen und mehreren Ausgängen zu separieren.

7. Radargerät nach Anspruch 6, bei dem die mehreren Nt -Sendeantennen (3) des MIMO-Radarantennenstrahls (2) mit mehreren Eingängen und mehreren Ausgängen zusammen angeordnet oder verteilt sind.

8. Radargerät nach Anspruch 6 oder 7, wobei die Empfangseinheit (7) des Radargeräts (1) so ausgelegt ist, dass sie eine Fast-Fourier-Transformation (FFT) oder eine diskrete Fourier-Transformation (DFT) der von mehreren Empfangsantennen (4) der MIMO-Radarantennengruppe (2) mit mehreren Eingängen und mehreren Ausgängen empfangenen Signale durchführt, um eine Zielantwort von allen Nt Sendeantennen (3) der MIMO-Radarantennengruppe (2) mit mehreren Eingängen und mehreren Ausgängen zu separieren.

9. Radargerät nach einem der Ansprüche 6 bis 8, wobei jedes zeitcodierte Datensignal, das von den mehreren Nt Sendeantennen (3) der MIMO-Radarantennengruppe (2) mit mehreren Eingängen und mehreren Ausgängen übertragen wird, Symbole umfasst, die von einer vorbestimmten Anzahl N von Frequenzhilfsträgern getragen werden.

10. Radargerät nach einem der Ansprüche 6 bis 9, wobei die zeitcodierten Datensignale, die von den mehreren Nt Sendeantennen (3) der MIMO-Radarantennengruppe (2) mit mehreren Eingängen und mehreren Ausgängen übertragen werden, OFDM-Symbole umfassen.

11. Radarnetz mit verteilten Radargeräten (1) nach einem der Ansprüche 6 bis 10.

12. Radarnetz nach Anspruch 11, wobei die verteilten Radargeräte mit einer zentralen Steuereinheit verbunden sind, die dazu angepasst ist, die verteilten Radargeräte (1) zu synchronisieren.

**Revendications**

1. Méthode permettant d'assurer l'orthogonalité des signaux transmis par les antennes d'émission (3) d'un système radar à entrées multiples et sorties multiples (MIMO), la méthode comprenant les étapes suivantes :

(a) transmission (S5A) de signaux de données codés dans le temps distincts provenant de plusieurs antennes d'émission (3), Nt, d'un réseau d'antennes radar MIMO à entrées et sorties multiples (2), dans lequel les signaux de données codés dans le temps distincts sont transmis sur Nt indices temporels consécutifs et représentés par

$$(x_i, \omega^{i-1}x_i, \omega^{2(i-1)}x_i, ..., \omega^{(N_t-1)(i-1)}x_i),$$

dans lequel $x_i$ est la donnée transmise par une ième antenne d'émission du multiple, Nt, antennes d'émission (3) sur l'indice de temps k+1, $\omega^{i-1}x_i$ est la donnée transmise par la ième antenne d'émission du multiple, Nt, antennes d'émission (3) sur l'indice de temps k+2, ... , $\omega^{(Nt-1)(i-1)}x_i$ est la donnée transmise par la ième antenne d'émission du multiple, Nt, antennes d'émission (3) sur l'indice de temps $k + Nt,$
où k est un nombre entier, i est un nombre entier positif compris entre 1 et Nt, et $\omega^z$ est la (z+1)-ème racine de l'unité, z = (0, 1, ... , Nt-1) ; et

(b) traiter (S5B) les signaux reçus par plusieurs antennes de réception dudit réseau d'antennes radar à entrées multiples et sorties multiples (MIMO) (2) afin de séparer une réponse de la cible de toutes les antennes d'émission (3) (Nt) dudit réseau d'antennes radar à entrées multiples et sorties multiples (MIMO) (2).

2. Méthode selon la revendication 1, dans laquelle les multiples antennes d'émission Nt (3) de ce réseau d'antennes radar MIMO à entrées et sorties multiples (2) sont situées au même endroit ou réparties.

3. Méthode selon la revendication 1 ou 2, dans laquelle le traitement des signaux reçus par les multiples antennes de réception (4) de ce réseau d'antennes radar MIMO à entrées et sorties multiples (2) comprend une transformation de Fourier rapide (FFT) ou une transformation de Fourier discrète (DFT).

4. Méthode selon les revendications 1 à 3, dans lequel chaque signal de données codé dans le temps transmis par les multiples antennes d'émission Nt (3) de ce réseau d'antennes radar MIMO à entrées et sorties multiples (2) comprend des symboles portés par un nombre prédéterminé N de sous-porteuses de fréquence.

5. Méthode selon les revendication 1 à 4, dans lequel les symboles de données codés dans le temps transmis par les multiples antennes d'émission Nt (3) de ce réseau d'antennes radar MIMO à entrées et sorties multiples (2) comprennent des symboles OFDM.

6. Appareil radar (1) conçu pour assurer l'orthogonalité des signaux transmis par les antennes d'émission (3) d'un réseau d'antennes radar à entrées multiples et sorties multiples (MIMO) (2) de l'appareil radar (1), l'appareil radar (1) comprenant :

une unité de transmission (6) adaptée pour transmettre des signaux de données distincts codés dans le temps à partir de plusieurs antennes de transmission (3), Nt, du réseau d'antennes radar (2) à entrées multiples et sorties multiples, MIMO, dans lequel l'unité de transmission (6) est adaptée pour transmettre les signaux de données distincts codés dans le temps sur Nt indices temporels consécutifs, les signaux de données distincts codés dans le temps transmis étant représentés par

$$(x_i, \omega^{i-1}x_i, \omega^{2(i-1)}x_i, ..., \omega^{(N_t-1)(i-1)}x_i),$$

dans lequel $x_i$ i est la donnée transmise par une ième antenne d'émission des multiples, Nt, antennes d'émission (3) sur l'indice de temps k+1, $\omega^{i-1}x_i$ est la donnée transmise par la ième antenne d'émission des multiples, Nt, antennes d'émission (3) sur l'indice de temps k+2, ... , $\omega^{(Nt-1)(i-1)}x_i$ est la donnée transmise par la ième antenne d'émission des multiples, Nt, antennes d'émission (3) sur l'indice de temps $k + Nt,$
où k est un nombre entier, i est un nombre entier positif compris entre 1 et Nt, et $\omega^z$ est une racine de l'unité (z+1), z = (0, 1, ... , Nt-1), et
une unité de réception (7) conçue pour traiter les signaux reçus par plusieurs antennes de réception (4) dudit réseau d'antennes radar à entrées multiples et sorties multiples (MIMO) (2) afin de séparer une réponse de la cible de toutes les Nt antennes d'émission (3) dudit réseau d'antennes radar à entrées multiples et sorties multiples (MIMO) (2).

7. Appareil radar selon la revendication 6, dans lequel les multiples antennes d'émission Nt (3) de l'antenne radar à entrées et sorties multiples MIMO (2) sont situées au même endroit ou réparties.

8. Appareil radar selon la revendication 6 ou 7, dans lequel l'unité de réception (7) dudit appareil radar (1) est adaptée pour effectuer une transformation de Fourier rapide (FFT) ou une transformation de Fourier discrète (DFT) des signaux reçus par les multiples antennes de réception (4) dudit réseau d'antennes radar à entrées et sorties multiples (MIMO) (2) afin de séparer une réponse de la cible de toutes les Nt antennes d'émission (3) dudit réseau d'antennes radar à entrées et sorties multiples (MIMO) (2).

9. Appareil radar selon l'une des revendications 6 à 8, dans lequel chaque signal de données codé dans le temps transmis par les multiples antennes d'émission Nt (3) dudit réseau d'antennes radar MIMO à entrées et sorties multiples (2) comprend des symboles portés par un nombre prédéterminé N de sous-porteuses de fréquence.

10. Appareil radar selon l'une des revendications 6 à 9, dans lequel les signaux de données codés dans le temps transmis par les multiples antennes d'émission Nt (3) de ce réseau d'antennes radar MIMO à entrées et sorties multiples (2) comprennent des symboles OFDM.

11. Réseau radar comprenant des appareils radar distribués (1) selon l'une des revendications 6 à 10.

12. Réseau radar selon la revendication 11, dans lequel les appareils radar distribués sont connectés à une unité de commande centrale capable de synchroniser les appareils radar distribués (1).

Fig. 1

Fig. 2

Fig. 3

Fig. 4

Tx. antennas →

| RSSI (1,1) | RSSI (1,2) |     | RSSI (2,N$_{TX}$) |
| RSSI (2,1) | RSSI (2,2) |     | RSSI (2,N$_{TX}$) |
| RSSI (3,1) | RSSI (3,2) | ... | RSSI (3,N$_{TX}$) |
| ...        | ...        |     | ... |
| RSSI (N,1) | RSSI (N,2) |     | RSSI (N,N$_{TX}$) |

subcarriers ↓

## Fig. 5

| Subcarrier 1 | Tx. Antenna 2 |
| Subcarrier 2 | Tx. Antenna N$_{TX}$ |
| Subcarrier 3 | Tx. Antenna 3 |
|              |               |
| Subcarrier N | Tx. Antenna 1 |

1 Frame = N$_{μm}$

Tx. Antenna
1 to
Tx. Antenna N$_{TX}$

## Fig. 6

1 Frame    Multiple Frames

| Probing Phase |  | . . . |  | Probing Phase |  | . . . |  | Probing Phase |  | . . . |  |

Adaptation Phase          Adaptation Phase          Adaptation Phase

## Fig. 7

1 Frame   1 Frame   1 Frame   1 Frame   1 Frame   1 Frame   1 Frame   1 Frame

| Probing Phase | Adaptation Phase | Probing Phase | Adaptation Phase | Probing Phase | Adaptation Phase | Probing Phase | Adaptation Phase |

## Fig. 8

Fig. 9

EP 3 339 892 B1

Fig. 10

S3A

S3B

Fig. 11

**Tx. Ant. 1**

| Tx. Ant. 1 | Symbol 1 | Symbol 2 |
|---|---|---|
| Freq. Bin 1 | $X_1(1)$ | $-X_2^*(1)$ |
| Freq. Bin 2 | $X_1(2)$ | $-X_2^*(2)$ |
| Freq. Bin 3 | $X_1(3)$ | $-X_2^*(3)$ |
|  | $\vdots$ | $\vdots$ |
| Freq. Bin N | $X_1(N)$ | $-X_2^*(N)$ |

**Tx. Ant. 2**

| Tx. Ant. 2 | Symbol 1 | Symbol 2 |
|---|---|---|
| Freq. Bin 1 | $X_2(1)$ | $X_1^*(1)$ |
| Freq. Bin 2 | $X_2(2)$ | $X_1^*(2)$ |
| Freq. Bin 3 | $X_2(3)$ | $X_1^*(3)$ |
|  | $\vdots$ | $\vdots$ |
| Freq. Bin N | $X_2(N)$ | $X_1^*(N)$ |

Tx 1 (3-1), Tx 2 (3-2), Rx 1 (4-1), Rx 16 (4-2)

**Rx. Ant. 1**

| Rx. Ant. 1 | Symbol 1 | Symbol 2 |
|---|---|---|
| Freq. Bin 1 | $X_1(1)H^1{}_1(1)+X_2(1)H^1{}_2(1)$ | $-X_2^*(1)H^1{}_1(1)+X_1^*(1)H^1{}_2(1)$ |
| Freq. Bin 2 | $X_1(2)H^1{}_1(2)+X_2(2)H^1{}_2(2)$ | $-X_2^*(2)H^1{}_1(2)+X_1^*(2)H^1{}_2(2)$ |
| Freq. Bin 3 | $X_1(3)H^1{}_1(3)+X_2(3)H^1{}_2(3)$ | $-X_2^*(3)H^1{}_1(3)+X_1^*(3)H^1{}_2(3)$ |
|  | $\vdots$ | $\vdots$ |
| Freq. Bin N | $X_1(N)H^1{}_1(N)+X_2(N)H^1{}_2(N)$ | $-X_2^*(N)H^1{}_1(N)+X_1^*(N)H^1{}_2(N)$ |

**Rx. Ant. 16**

| Rx. Ant. 16 | Symbol 1 | Symbol 2 |
|---|---|---|
| Freq. Bin 1 | $X_1(1)H^{16}{}_1(1)+X_2(1)H^{16}{}_2(1)$ | $-X_2^*(1)H^{16}{}_1(1)+X_1^*(1)H^{16}{}_2(1)$ |
| Freq. Bin 2 | $X_1(2)H^{16}{}_1(2)+X_2(2)H^{16}{}_2(2)$ | $-X_2^*(2)H^{16}{}_1(2)+X_1^*(2)H^{16}{}_2(2)$ |
| Freq. Bin 3 | $X_1(3)H^{16}{}_1(3)+X_2(3)H^{16}{}_2(3)$ | $-X_2^*(3)H^{16}{}_1(3)+X_1^*(3)H^{16}{}_2(3)$ |
|  | $\vdots$ | $\vdots$ |
| Freq. Bin N | $X_1(N)H^{16}{}_1(N)+X_2(N)H^{16}{}_2(N)$ | $-X_2^*(N)H^{16}{}_1(N)+X_1^*(N)H^{16}{}_2(N)$ |

Fig. 12

EP 3 339 892 B1

**Matched Filtering Tx Antenna 1**
Target Data
$Sym\ 1^*(x_1^*) + Symb\ 2^*(-x_2)$

| Rx. Ant. 1 | Transformed Signal from Transmit Antenna 1 |
|---|---|
| Freq. Bin 1 | $|X_1(1)|^2 H^1_1(1) + X^*_1(1)X_2(1)H^1_2(1) + |X_2(1)|^2 H^1_1(1) - X_2(1)X^*_1(1)H^1_2(1)$ |
| Freq. Bin 2 | $|X_1(2)|^2 H^1_1(2) + X^*_1(2)X_2(2)H^1_2(2) + |X_2(2)|^2 H^1_1(2) - X_2(2)X^*_1(2)H^1_2(2)$ |
| Freq. Bin 3 | $|X_1(3)|^2 H^1_1(3) + X^*_1(3)X_2(3)H^1_2(3) + |X_2(3)|^2 H^1_1(3) - X_2(3)X^*_1(3)H^1_2(3)$ |
| | ... |
| | ... |
| Freq. Bin N | $|X_1(N)|^2 H^1_1(N) + X^*_1(N)X_2(N)H^1_2(N) + |X_2(N)|^2 H^1_1(N) - X_2(N)X^*_1(N)H^1_2(N)$ |

$$= (|x_1|^2 + |x_2|^2)\begin{bmatrix} H^1_1(1) \\ H^1_1(2) \\ \cdots \\ H^1_1(N) \end{bmatrix}$$

Rx 1

**Matched Filtering Tx Antenna 2**
Target Data
$Sym\ 1^*(x_2^*) + Symb\ 2^*(x_1)$

| Rx. Ant. 1 | Transformed Signal from Transmit Antenna 1 |
|---|---|
| Freq. Bin 1 | $|X_2(1)|^2 H^1_2(1) + X_1(1)X^*_2(1)H^1_1(1) + |X_1(1)|^2 H^1_2(1) - X_1(1)X^*_2(1)H^1_1(1)$ |
| Freq. Bin 2 | $|X_2(2)|^2 H^1_2(2) + X_1(2)X^*_2(2)H^1_1(2) + |X_1(2)|^2 H^1_2(2) - X_1(2)X^*_2(2)H^1_1(2)$ |
| Freq. Bin 3 | $|X_2(3)|^2 H^1_2(3) + X_1(3)X^*_2(3)H^1_1(3) + |X_1(3)|^2 H^1_2(3) - X_1(3)X^*_2(3)H^1_1(3)$ |
| | ... |
| | ... |
| Freq. Bin N | $|X_2(N)|^2 H^1_2(N) + X_1(N)X^*_2(N)H^1_1(N) + |X_1(N)|^2 H^1_2(N) - X_1(N)X^*_2(N)H^1_1(N)$ |

$$= (|x_1|^2 + |x_2|^2)\begin{bmatrix} H^2_1(1) \\ H^2_1(2) \\ \cdots \\ H^2_1(N) \end{bmatrix}$$

Fig. 13

Transmit Antenna 1 (3-1)

| SYM 1 | SYM 2 | SYM 3 | SYM 4 | SYM 5 | SYM 6 | ... | SYM K-1 | SYM K |
|---|---|---|---|---|---|---|---|---|
| $p^1 x_1(1)$ | $-p^1 x_2^*(1)$ | $p^2 x_1(1)$ | $-p^2 x_2^*(1)$ | $p^3 x_1(1)$ | $-p^3 x_2^*(1)$ | | $p^{K/2} x_1(1)$ | $-p^{K/2} x_2^*(1)$ |
| $p^1 x_1(2)$ | $-p^1 x_2^*(2)$ | $p^2 x_1(2)$ | $-p^2 x_2^*(2)$ | $p^3 x_1(2)$ | $-p^3 x_2^*(2)$ | | $p^{K/2} x_1(2)$ | $-p^{K/2} x_2^*(2)$ |
| $p^1 x_1(3)$ | $-p^1 x_2^*(3)$ | $p^2 x_1(3)$ | $-p^2 x_2^*(3)$ | $p^3 x_1(3)$ | $-p^3 x_2^*(3)$ | | $p^{K/2} x_1(3)$ | $-p^{K/2} x_2^*(3)$ |
| | | | | | | | | |
| | | | | | | | | |
| $p^1 x_1(N)$ | $-p^1 x_2^*(N)$ | $p^2 x_1(N)$ | $-p^2 x_2^*(N)$ | $p^3 x_1(N)$ | $-p^3 x_2^*(N)$ | | $p^{K/2} x_1(N)$ | $-p^{K/2} x_2^*(N)$ |

Transmit Antenna 2 (3-2)

| SYM 1 | SYM 2 | SYM 3 | SYM 4 | SYM 5 | SYM 6 | ... | SYM K-1 | SYM K |
|---|---|---|---|---|---|---|---|---|
| $p^1 x_2(1)$ | $p^1 x_1^*(1)$ | $p^2 x_2(1)$ | $p^2 x_1^*(1)$ | $p^3 x_2(1)$ | $p^3 x_1^*(1)$ | | $p^{K/2} x_2(1)$ | $p^{K/2} x_1^*(1)$ |
| $p^1 x_2(2)$ | $p^1 x_1^*(2)$ | $p^2 x_2(2)$ | $p^2 x_1^*(2)$ | $p^3 x_2(2)$ | $p^3 x_1^*(2)$ | | $p^{K/2} x_2(2)$ | $p^{K/2} x_1^*(2)$ |
| $p^1 x_2(3)$ | $p^1 x_1^*(3)$ | $p^2 x_2(3)$ | $p^2 x_1^*(3)$ | $p^3 x_2(3)$ | $p^3 x_1^*(3)$ | | $p^{K/2} x_2(3)$ | $p^{K/2} x_1^*(3)$ |
| | | | | | | | | |
| | | | | | | | | |
| $p^1 x_2(N)$ | $p^1 x_1^*(N)$ | $p^2 x_2(N)$ | $p^2 x_1^*(N)$ | $p^3 x_2(N)$ | $p^3 x_1^*(N)$ | | $p^{K/2} x_2(N)$ | $p^{K/2} x_1^*(N)$ |

Fig. 14

EP 3 339 892 B1

S5A

S5B

Fig. 15

| Tx. Ant. 1 | Symbol 1 | Symbol 2 | ... | Symbol Nt |
|---|---|---|---|---|
| Freq. Bin 1 | $x_1(1)$ | $x_1(1)$ | ... | $x_1(1)$ |
| Freq. Bin 2 | $x_1(2)$ | $x_1(2)$ | ... | $x_1(2)$ |
| | | | | |
| Freq. Bin N | $x_1(N)$ | $x_1(N)$ | ... | $x_1(N)$ |

| Tx. Ant. 2 | Symbol 1 | Symbol 2 | ... | Symbol Nt |
|---|---|---|---|---|
| Freq. Bin 1 | $x_2(1)$ | $\omega x_2(1)$ | ... | $\omega^{Nt-1} x_2(1)$ |
| Freq. Bin 2 | $x_2(2)$ | $\omega x_2(2)$ | ... | $\omega^{Nt-1} x_2(2)$ |
| | | | | |
| Freq. Bin N | $x_2(N)$ | $\omega x_2(N)$ | ... | $\omega^{Nt-1} x_2(N)$ |

| Tx. Ant. Nt | Symbol 1 | Symbol 2 | ... | Symbol Nt |
|---|---|---|---|---|
| Freq. Bin 1 | $x_{Nt}(1)$ | $\omega^{N-1} x_{Nt}(1)$ | ... | $\omega^{(Nt-1)(Nt-1)} x_{Nt}(1)$ |
| Freq. Bin 2 | $x_{Nt}(2)$ | $\omega^{N-1} x_{Nt}(2)$ | ... | $\omega^{(Nt-1)(Nt-1)} x_{Nt}(2)$ |
| | | | | |
| Freq. Bin N | $x_{Nt}(N)$ | $\omega^{N-1} x_{Nt}(N)$ | ... | $\omega^{(Nt-1)(Nt-1)} x_{Nt}(N)$ |

# Fig. 16

| Rx. Ant. Nr | Symbol 1 | ... | Symbol Nt |
|---|---|---|---|
| Freq. Bin 1 | $h_{Nr,1}x_1(1)$ $+h_{Nr,2}x_2(1)$ $+...$ $+h_{Nr,Nt}x_{Nt}(1)$ | | $h_{Nr,1}x_1(1) + h_{Nr,2}\omega^{Nt-1}x_2(1)$ $+...+h_{Nr,Nt}\omega^{(Nt-1)(Nt-1)}x_{Nt}(1)$ |
| Freq. Bin 2 | $h_{Nr,1}x_1(2)$ $+h_{Nr,2}x_2(2)$ $+...$ $+h_{Nr,Nt}x_{Nt}(2)$ | | $h_{Nr,1}x_1(2) + h_{Nr,2}\omega^{Nt-1}x_2(2)$ $+...+h_{Nr,Nt}\omega^{(Nt-1)(Nt-1)}x_{Nt}(2)$ |
| | | | |
| Freq. Bin N | $h_{Nr,1}x_1(N)$ $+h_{Nr,2}x_2(N)$ $+...$ $+h_{Nr,Nt}x_{Nt}(N)$ | | $h_{Nr,1}x_1(N) + h_{Nr,2}\omega^{Nt-1}x_2(N)$ $+...+h_{Nr,Nt}\omega^{(Nt-1)(Nt-1)}x_{Nt}(N)$ |

Fig. 17

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130342387 A1
- US 20160334501 A1
- US 20150295628 A1